# EUROPÄISCHE PATENTSCHRIFT

(11) **EP 2 636 912 B1**
(45) Veröffentlichungstag und Bekanntmachung des Hinweises auf die Patenterteilung: **01.07.2015**
(21) Anmeldenummer: 13401019.8
(22) Anmeldetag: 01.03.2013
(51) Int. Cl.: F16B 13/12

(54) **Verfahren zum Verbinden einer Vorsatzschale mit einem Verankerungsgrund**
Method for connecting a facing with an anchoring base
Procédé de liaison d'un panneau d'habillage avec une base d'ancrage

(30) Priorität: 06.03.2012 DE 102012101844
(43) Veröffentlichungstag der Anmeldung: 11.09.2013
(73) Patentinhaber: fischerwerke GmbH & Co. KG, 72178 Waldachtal (DE)
(72) Erfinder: Fischer, Rainer, 72178 Waldachtal (DE); Kaupp, Jochen, 72178 Waldachtal (DE)

(56) Entgegenhaltungen:
- EP-A1- 0 928 901
- DE-A1-102011 051 378
- DE-C2- 2 747 329

## Beschreibung

Die Erfindung betrifft ein Verfahren zum Verbinden einer Vorsatzschale mit einem Verankerungsgrund mit den Merkmalen des Oberbegriffs des Anspruchs 1.

Zum Verbinden einer Vorsatzschale mit einem Verankerungsgrund wird üblicherweise ein Dübelsystem verwendet, wie es in der europäischen Patentanmeldung EP 0 928 901 A1 oder in der deutschen Patentanmeldung DE 10 2011 051 378 beschrieben ist. Das Dübelsystem weist zwei Spreizdübel und ein Spreizelement zum Verspreizen und Verbinden der Spreizdübel auf. Mit dem ersten Spreizdübel wird das Dübelsystem im Verankerungsgrund, beispielsweise einer Stahlbetonwand, verankert. Mit dem zweiten Spreizdübel wird das Dübelsystem in der Vorsatzschale, beispielsweise einer Wand aus Verblendmauerwerk, befestigt, so dass die Vorsatzschale mit dem Verankerungsgrund über das Dübelsystem verbunden ist. Im Regelfall nimmt das Dübelsystem Zug- und Druckkräfte auf, die auf die Vorsatzschale wirken, und leitet die Kräfte in den lastabtragenden Verankerungsgrund ein.

Das bekannte Verfahren zum Verbinden einer Vorsatzschale mit einem Verankerungsgrund umfasst folgende Schritte:
a) Bohren eines Bohrlochs durch die Vorsatzschale hindurch in den Verankerungsgrund;
b) Setzen des ersten Spreizdübels in das Bohrloch im Verankerungsgrund und Setzen des zweiten Spreizdübels in das Bohrloch in der Vorsatzschale, wobei dies gleichzeitig erfolgen kann, beispielsweise wenn die beiden Spreizdübel als Dübelhülse einstückig miteinander verbunden sind, wie dies die oben genannten Patentanmeldungen zeigen; und
c) Verspreizen der Spreizdübel durch Einbringen des Spreizelements.

Zum Verspreizen ist an dem Spreizelement ein Spreizabschnitt angeordnet, mit dem ein Spreizbereich des ersten Spreizdübels aufgespreizt wird. Der Spreizabschnitt ist bei den bekannten Dübelsystemen als Gewinde ausgebildet, so dass das Spreizelement in den ersten Spreizdübel drehend eingebracht wird. Das Gewinde greift beim Einschrauben in den ersten Spreizdübel ein und weitet dessen Spreizbereich, wodurch der erste Spreizdübel im Verankerungsgrund verankert wird. Dabei wird ein Einzugsabschnitt, der zum Spreizen eines Spreizbereichs des zweiten Spreizdübels dient, in den zweiten Spreizdübel eingezogen, so dass der zweite Spreizdübel verspreizt und das Dübelsystem in der Vorsatzschale befestigt wird.

Der Einzugsabschnitt ist derart gestaltet, dass er durch die Drehbewegung nicht selbstständig in den Spreizbereich des zweiten Spreizdübels eindringen kann, insbesondere weist er an einem in Einbringrichtung vorderen Abschnitt kein Gewinde auf. Der Einzugsabschnitt erzeugt daher auch dann durch die Drehbewegung keinen Vortrieb in axialer Richtung, wenn er mit einem vorderen Abschnitt in den zweiten Dübel eingreift. Der Einzugsabschnitt muss also durch das Eindrehen des Gewindes in den ersten Spreizdübel in den zweiten Spreizdübel eingezogen werden. Dies dient zur Kontrolle beim Setzen des Dübelsystems: Greift das Gewinde nicht in den ersten Spreizdübel ein oder kann der erste Spreizdübel keine ausreichend große Kraft in den Verankerungsgrund übertragen, so ist es nicht möglich, den Einzugsabschnitt in den zweiten Spreizdübel drehend einzubringen. Der Monteur kann das Dübelsystem somit nicht setzen. Der Einzugsabschnitt muss nicht vollständig ohne Gewinde ausgelegt sein. Wie aus der deutschen Patentanmeldung DE 10 2011 051 378 bekannt ist, kann auch ein in Einbringrichtung hinterer Bereich des Einzugsabschnitts als Gewinde ausgebildet sein, um das zum Einbringen des Spreizelements in das Dübelsystem notwendige Drehmoment zu verringern. Allerdings ist auch in diesem Fall an dem in Einbringrichtung vorderen Abschnitt des Einzugsabschnitts kein Gewinde angeordnet, so dass die Kontrolle beim Setzen des Dübelsystems gewährleistet ist.

Nachteilig an dem bekannten Verfahren ist, dass nach dem Verspreizen der Spreizdübel nicht festgestellt werden kann, ob der zweite Spreizdübel so in der Vorsatzschale verankert ist, dass eine ausreichend große Haltekraft vom zweiten Spreizdübel auf die Vorsatzschale übertragen werden kann. Der Monteur weiß nur, dass der erste Spreizdübel planmäßig im Verankerungsgrund verankert ist.

Aufgabe der Erfindung ist es daher, ein Verfahren zur Prüfung der Haltekraft des Dübelsystems in der Vorsatzschale vorzuschlagen.

Diese Aufgabe wird erfindungsgemäß durch ein Verfahren mit den Merkmalen des Anspruchs 1 gelöst. Erfindungsgemäß umfasst das Verfahren, neben den oben beschriebenen Schritten a) bis c) zum Setzen des Dübelsystems, folgende Schritte:
d) Erstellen eines Prüfbohrlochs in der Vorsatzschale;
e) Setzen eines dritten Spreizdübels in das Prüfbohrloch;
f) Einbringen einer Prüflehre in den dritten Spreizdübel, wodurch der dritte Spreizdübel verspreizt wird; und
g) Aufbringen einer Prüflast auf die Prüflehre zum Prüfen der Haltekraft des dritten Spreizdübels in der Vorsatzschale.

Im Schritt d) wird zunächst ein Prüfbohrloch in der Vorsatzschale erstellt. Die Abmessungen des Prüfbohrlochs entsprechen insbesondere denen eines Bohrlochs, das im Schritt a) erstellt wird. Ist die Vörsatzschale aus unterschiedlichen Baustoffen aufgebaut, besteht sie beispielsweise aus einem Mauerwerk mit Fugen und Mauerziegeln, so wird das Prüfbohrloch insbesondere dort erstellt, wo die geringsten Haltekräfte zu erwarten sind, beispielsweise in einer Fuge zwischen zwei Mauerziegeln. Insbesondere kann ein im Schritt a) erstelltes Bohrloch als Prüfbohrloch verwendet werden. Nach Abschluss des Schritts g) kann in diesem Fall die Prüflehre und der dritte Spreizdübel entfernt und das Prüfbohrloch dann für die Schritte b) und c) verwendet werden.

Insbesondere werden die Schritte d) bis g) vor den Schritten a) bis c) durchgeführt. Dabei wird zuerst über die Schritte d) bis g) die Haltekraft ermittelt, über die die notwendige Anzahl und die Abstände der zum Verbinden der Vorsatzschale mit dem Verankerungsgrund benötigten Dübelsysteme festgelegt werden. Dann werden die Dübelsysteme montiert (Schritte a) bis c)), wobei der Einzugsabschnitt durch das Einschrauben (Eintreiben) des Spreizabschnitts in den Spreizbereich des ersten Spreizdübels in den Spreizbereich des zweiten Spreizdübels eingezogen wird. Grundsätzlich ist es aber auch möglich, dass die Schritte d) bis g) nach den Schritten a) bis c) erfolgen, oder aber nur nach Schritt a), wenn das Bohrloch als Prüfbohrloch verwendet werden soll.

Im Schritt e) wird ein dritter Spreizdübel in das Prüfbohrloch gesetzt. Das Setzen des dritten Spreizdübels in das Prüfbohrloch erfolgt insbesondere so, dass seine Lage im Prüfbohrloch im Wesentlichen mit der Lage eines zweiten Spreizdübels übereinstimmt, wenn dieser im Schritt b) in ein Bohrloch in der Vorsatzschale eingesetzt wird. Wird beispielsweise der zweite Spreizdübel planmäßig bündig in ein Bohrloch in einer Fuge zwischen zwei Ziegelsteinen eines Verblendmauerwerks eingesetzt, so kann auch der dritte Spreizdübel bündig in ein Prüfbohrloch eingesetzt werden, das in einer Fuge erstellt wurde.

Als Schritt f) wird eine Prüflehre in den in das Prüfbohrloch gesetzten dritten Spreizdübel eingebracht, wodurch der dritte Spreizdübel in der Vorsatzschale verspreizt wird. Nach dem Verspreizen wird im Schritt g) eine Prüflast auf die Prüflehre aufgebracht. Die Prüflehre kann hierfür eine Verbindungsvorrichtung aufweisen, beispielsweise in der Form eines Nagel- oder Schraubenkopfs oder eines Gewindes. Die Prüflast wird auf die Prüflehre beispielsweise durch ein Auszugsgerät aufgebracht, wie es aus der Patentschrift DE 27 47 329 C2 bekannt ist. Das Prüfen der Haltekraft kann dabei so erfolgen, dass auf die Prüflehre eine definierte Prüflast aufgebracht wird, wobei die Prüflast zuvor unter Berücksichtigung der zu erwartenden Belastung des Dübelsystems zu ermitteln ist. Alternativ kann die Prüflast kontinuierlich erhöht werden, bis die Vorsatzschale und/oder der dritte Spreizdübel und/oder die Prüflehre versagt. Aus der so ermittelten Prüflast bei Versagen der Befestigungsanordnung kann dann die von der Vorsatzschale auf das Dübelsystem übertragbare Haltekraft ermittelt werden. Erfindungsgemäß wird somit die Haltekraft des Dübelsystems in der Vorsatzschale durch die Verwendung eines dritten Spreizdübels und einer Prüflehre ermittelt und auf das Dübelsystem übertragen. Eine Überprüfung der Haltekraft des eigentlichen Dübelsystems in der Vorsatzschale erfolgt nicht. Die Haltekraft wird erfindungsgemäß ersatzweise und unabhängig vom Dübelsystem durch Verwendung einer geeigneten Kombination aus Prüflehre und drittem Spreizdübel ermittelt. Insbesondere erfolgt die Prüfung erfindungsgemäß unabhängig von der Verankerung im Verankerungsgrund. Bei den Schritten e) bis g) des erfindungsgemäßen Verfahrens handelt es sich um eine Ersatzprüfung für das eigentliche, zum Verbinden der Vorsatzschale mit dem Verankerungsgrund verwendete Dübelsystem.

Vorzugsweise ist die Prüflehre derart gestaltet, dass der mittels der Prüflehre verspreizte dritte Spreizdübel im Prüfbohrloch in der Vorsatzschale im Wesentlichen die gleiche Haltekraft erreicht, wie ein durch den Einzugsabschnitt verspreizter zweiter Spreizdübel in einem Bohrloch in der Vorsatzschale. Insbesondere kann die Geometrie der Prüflehre von der Geometrie des Einzugsabschnitts abweichen. Die Geometrie der Prüflehre ist insbesondere für die Durchführung der Ersatzprüfung zum Nachweis der Haltekräfte des zweiten Spreizankers des Dübelsystems optimiert, während der Einzugsabschnitt zum Nachweis der planmäßigen Verankerung des ersten Spreizdübels im Verankerungsgrund ausgestaltet ist.

Um möglichst vergleichbare Bedingungen bei der Ersatzprüfung zu schaffen, ist weiterhin bevorzugt, dass der mittels der Prüflehre aufzuspreizende Spreizbereich des dritten Spreizdübels im Wesentlichen dem Spreizbereich des zweiten Spreizdübels entspricht, der mit dem Einzugsabschnitt aufgespreizt wird. Insbesondere kann der dritte Spreizdübel baugleich mit einem zweiten Spreizdübel sein, damit für das erfindungsgemäße Verfahren möglichst wenig verschiedene Elemente notwendig sind.

Vorzugsweise wird die Prüflehre im Schritt f) drehend in den dritten Spreizdübel eingebracht. Durch das drehende Einbringen wird erreicht, dass die Prüflehre in den dritten Spreizdübel selbständig, durch einen durch das Drehen erzeugten Vortrieb in axialer Richtung, in den dritten Spreizdübel eingeführt werden kann. Eine äußere Zug- oder Druckkraft, wie sie beim Dübelsystem vom Spreizabschnitt beim Eindrehen in den ersten Spreizdübel auf den Einzugsabschnitt übertragen wird, ist zum Einbringen der Prüflehre nicht notwendig. Damit wird verhindert, dass sich die Lage des dritten Spreizdübels im Prüfbohrloch beim Einbringen der Prüflehre wesentlich verändert, wie dies beispielsweise der Fall ist, wenn die Prüflehre in den dritten Spreizdübel eingedrückt oder eingeschlagen werden würde. Ein Eindrücken oder Einschlagen der Prüflehre könnte dazu führen, dass der dritte Spreizdübel durch das Prüfbohrloch hindurch in einen Zwischenraum zwischen der Vorsatzschale und dem Verankerungsgrund geschoben werden würde, indem er nicht aufgespreizt werden kann. Ein Prüfen der Haltekraft des dritten Spreizdübels in der Vorsatzschale wäre somit nicht möglich. Ohne den Erfindungsgedanken zu verlassen, könnte alternativ der Spreizdübel eine Halteeinrichtung, beispielsweise einen sich an der Außenseite der Vorsatzschale abstützenden Flansch, aufweisen. Hierdurch könnte die Prüflehre auch eingeschoben oder eingeschlagen werden und somit insbesondere die gleiche Geometrie wie der Einzugsabschnitt aufweisen.

Bevorzugt ist jedoch, dass die Prüflehre ein Aufweitelement zum Verspreizen eines Spreizbereichs des dritten Spreizdübels aufweist, wobei an dem Aufweitelement zumindest an einem in Eintreibrichtung vorderen Abschnitt ein Gewinde angeordnet ist. Mit dem Gewinde kann die Prüflehre in den dritten Spreizdübel eingedreht werden. Die Prüflehre erzeugt mit dem Gewinde einen axialen Vortrieb. Ein Einschlagen oder Eindrücken der Prüflehre in den dritten Spreizdübel ist somit nicht notwendig. Insbesondere ist bevorzugt, dass die Prüflehre vor dem Gewinde keinen gewindelosen Abschnitt aufweist, wie dies beim Spreizelement des Dübelsystems der Fall ist.

Vorzugsweise ist der Spreizabschnitt des Spreizelements des Dübelsystems als Schraubengewinde ausgebildet, mit einer Gewindesteigung, die im Wesentlichen der Gewindesteigung des Aufweitelements der Prüflehre entspricht. Dadurch wird erreicht, dass die Prüflehre bei einer Umdrehung im Wesentlichen gleich weit in den dritten Spreizdübel eingeführt wird, wie dies für den Einzugsabschnitt beim Eindrehen des Spreizelements in die Spreizdübel des Dübelsystems der Fall ist, der durch den Vortrieb des ersten Spreizabschnitts in den zweiten Spreizdübel eingezogen wird. Die Montagegeschwindigkeit ist somit beim Aufspreizen eines Spreizdübels beim Eindrehen der Prüflehre mit der beim Aufspreizen des Spreizdübels beim Einziehen des Einzugsabschnitts in den Spreizdübel vergleichbar.

Weiterhin ist bevorzugt, dass der Einzugsabschnitt des Spreizelements axial beabstandete, umlaufende Rippen aufweist, wobei der axiale Abstand der Rippen im Wesentlichen der Gewindesteigung des Gewindes des Aufweitelements entspricht. Der Einzugsabschnitt und das Aufweitelement weisen somit eine sehr ähnliche Außenkontur auf. Da das Aufspreizverhalten und die zwischen dem Einzugsabschnitt bzw. dem Aufweitelement und einem Spreizdübel wirkenden Kräfte im Wesentlichen von der Außenkontur abhängig sind, wird hierdurch erreicht, dass das Aufweitelement und der Einzugsabschnitt in einem Spreizdübel im Wesentlichen gleiche Haltekräfte erreichen.

Zudem ist bevorzugt, dass der Durchmesser des Aufweitelements der Prüflehre im Wesentlichen dem Durchmesser des Einzugsabschnitts des Spreizelements entspricht. Vorzugsweise entspricht die axiale Länge des Aufweitelements der Prüflehre im Wesentlichen der axialen Länge des Einzugsabschnitts des Spreizelements. Insbesondere dann, wenn der Spreizbereich des dritten Spreizdübels mit dem Spreizbereich des zweiten Spreizdübels im Wesentlichen identisch ist, wird durch die geometrische Anpassung der Gewindesteigung, des Durchmessers und/oder der axialen Länge erreicht, dass mit der Prüflehre in der Vorsatzschale im Wesentlichen die gleichen Haltekraft erzielt werden kann, wie dies mit dem Dübelsystem der Fall ist.

Die Erfindung wird nachfolgend anhand eines in der Zeichnung dargestellten Ausführungsbeispiels näher erläutert.

Es zeigen:
- Figur 1: die Dübelhülse eines Dübelsystems mit einem ersten und einem zweiten Spreizdübel in einer Seitenansicht;
- Figur 2: ein Spreizelement des Dübelsystems in einer Seitenansicht;
- Figur 3: ein dritter Spreizdübel in einer Seitenansicht;
- Figur 4: eine Prüflehre in einer Seitenansicht;
- Figur 5: ein Verankerungsgrund und eine Vorsatzschale mit einem eingebrachten Bohrer zum Bohren eines Bohrlochs bzw. Prüfbohrlochs in einer Schnittdarstellung;
- Figur 6: ein in das Prüfbohrloch eingebrachter dritter Spreizdübel in einer Schnittdarstellung;
- Figur 7: der dritte Spreizdübel mit eingebrachter Prüflehre im Prüfbohrloch in einer Schnittdarstellung;
- Figur 8: die Dübelhülse im Bohrloch in einer Schnittdarstellung;
- Figur 9: das Einbringen des Spreizelements in die Dübelhülse in einer Schnittdarstellung; und
- Figur 10: die durch das Dübelsystem mit dem Untergrund verbundene Vorsatzschale in einer Schnittdarstellung.

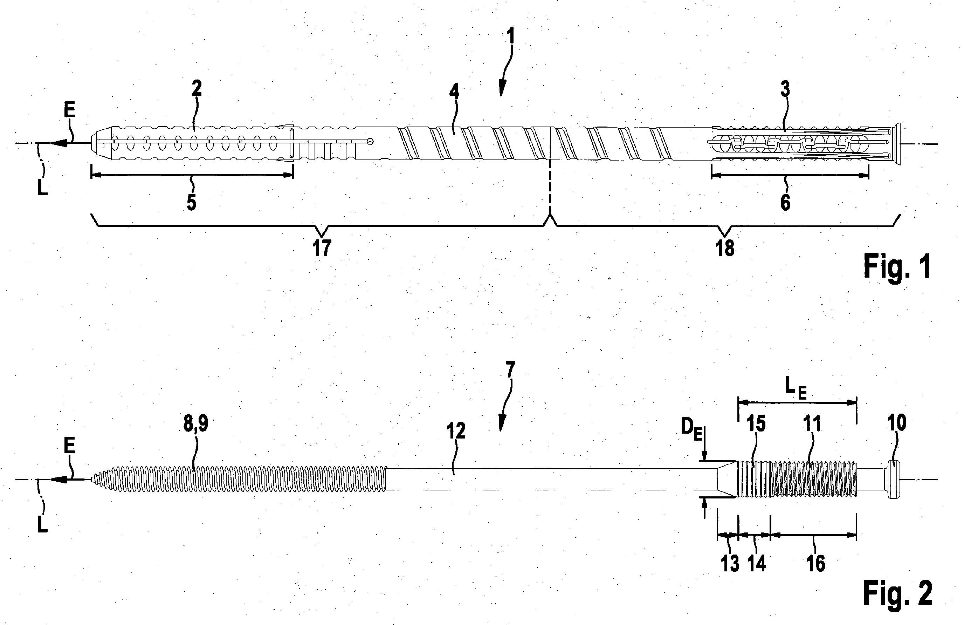

In den Figuren 1 bis 4 sind zunächst die für das erfindungsgemäße Verfahren notwendigen Bauteile dargestellt:
Figur 1 zeigt eine Dübelhülse 1 eines erfindungsgemäßen Dübelsystems, die an ihrem in Einbringrichtung E vorderen Ende einen ersten Spreizdübel 2 und an ihrem in Einbringrichtung E hinteren Ende einen zweiten Spreizdübel 3 aufweist. Die beiden Spreizdübel 2, 3 sind jeweils mit je einem Teil einer Abstandshülse 4 einstückig und durch die Abstandshülse 4 miteinander verbunden. Die Dübelhülse 1 ist zweiteilig, mit einem vorderen Teil 17 und einem hinteren Teil 18. Der erste Spreizdübel 2 weist einen geschlitzten Spreizbereich 5 auf, während der zweite Spreizdübel 3 einen mehrfach durchbrochenen Spreizbereich 6 zum Befestigen in einer Vorsatzschale umfasst.

In Figur 2 ist ein Spreizelement 7 dargestellt, das mit der Dübelhülse 1 das Dübelsystem bildet. Das Spreizelement 7 weist an seinem in Einbringrichtung E vorderen Ende einen Spreizabschnitt 8 in Form eines Schraubengewindes 9 auf. Der Spreizabschnitt 8 dient zum Aufspreizen des Spreizbereichs 5 des ersten Spreizdübels 2. Da am Spreizabschnitt 8 ein Schraubengewinde 9 ausgebildet ist, bewirkt ein Drehen des in die Dübelhülse 1 eingeführten Spreizelements 7 einen axialen Vortrieb des Spreizelements 7 in der Dübelhülse 1 in Richtung der Einbringrichtung E. An seinem hinteren Ende ist am Spreizelement 7 ein Schraubenkopf 10 mit einer nicht näher dargestellten Aufnahme für ein ebenfalls nicht dargestelltes Drehwerkzeug ausgebildet. Das Drehwerkzeug kann beispielsweise ein Schraubendreher oder ein Bit eines Schraubers sein. In Richtung der Einbringrichtung E vor dem Schraubenkopf 10 ist am Spreizelement 7 ein Einzugsabschnitt 11 mit einer axialen Länge L_{E} angeordnet, der einen gegenüber einem Schraubenschaft 12 vergrößerten Durchmesser D_{E} aufweist. Der Einzugsabschnitt 11 besteht aus einem vorderen, zylindrischen Abschnitt 14 mit mehreren umlaufenden Rippen 15 und einem hinteren Gewindeabschnitt 16. Die Rippen 15 erzeugen beim Einziehen in den Spreizbereich 6 des zweiten Spreizdübels 3 den gewünschten Widerstand und weiten den Spreizbereich 6. Die Rippen 15 sind voneinander axial beabstandet, wobei der axiale Abstand zwischen zwei benachbarten Rippen 15 im Wesentlichen der Gewindesteigung des Schraubengewindes 9 entspricht. Zwischen dem Schraubenschaft 12 und dem Einzugsabschnitt 11 befindet sich ein konischer Übergangsabschnitt 13. Durch ein Drehen des Spreizelements 7 in der Dübelhülse 1 wird das Spreizelement 7 axial in Richtung der Einbringrichtung E bewegt, wodurch der zylindrische Abschnitt 14 in den zweiten Spreizdübel 3 eingezogen wird, ohne dass er selbst zum axialen Vortrieb des Spreizelements 7 beiträgt. Dabei wird der Spreizbereich 6 des zweiten Spreizdübels 3 aufgespreizt. Erst wenn der zylindrische Gewindeabschnitt 16 in den zweiten Spreizdübel 3 eingreift, erzeugt auch der Einzugsabschnitt 11 einen Vortrieb in axialer Richtung, wodurch das zum Eindrehen des Spreizelements 7 notwendige Drehmoment deutlich reduziert wird. Dabei ist die Steigung des Schraubengewindes 9 gleich wie die Steigung des Gewindeabschnitts 16.

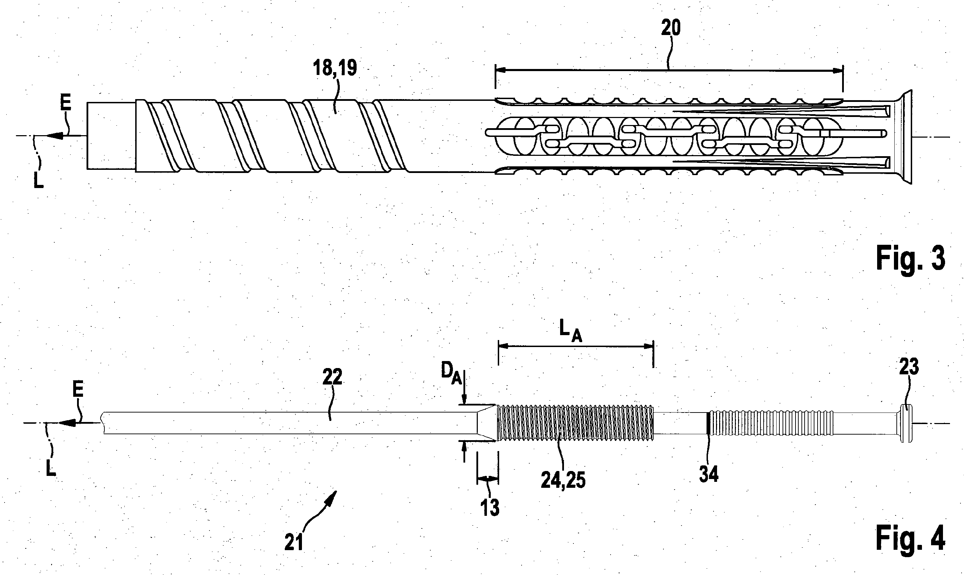

Figur 3 zeigt einen dritten Spreizdübel 19, der geometrisch identisch mit dem hinteren Teil 18 der Dübelhülse 1 ist. Somit entspricht der Spreizbereich 20 des dritten Spreizdübels 19 dem Spreizbereich 6 des zweiten Spreizdübels 3 (vgl. Figur 1).

In Figur 4 ist eine Prüflehre 21 dargestellt. Die Prüflehre 21 weist einen zylindrischen Schaftabschnitt 22 auf, mit einem Kopf 23, der gleich wie der Schraubenkopf 10 des Spreizelements 7 ausgebildet ist. Am Schaftabschnitt 22 ist ein zylindrisches Aufweitelement 24 angeordnet, dessen axiale Länge L_{A} und Durchmesser D_{A} der axialen Länge L_{E} bzw. dem Durchmesser D_{E} des Einzugsabschnitts 11 des Spreizelements 7 entspricht. Am Übergang zwischen dem Schaftabschnitt 22 und dem Aufweitelement 24 ist wie beim Spreizelement 7 ein konischer Übergangsabschnitt 13 angeordnet. Das Aufweitelement 24 unterscheidet sich vom Einzugsabschnitt 11 dadurch, dass kein gewindefreier zylindrischer Abschnitt 14 ausgebildet ist. Das Aufweitelement 24 weist über seine gesamte Länge L_{A} ein Gewinde 25 auf. Die Gewindesteigung des Gewindes 25 entspricht im Wesentlichen der Gewindesteigung des Schraubgewindes 9 des Spreizelements 7. Wird die Prüflehre 21 in den dritten Spreizdübel 19 eingeführt, so greift das Gewinde 25 in den Spreizbereich 20 des dritten Spreizdübels 19 ein und erzeugt einen axialen Vortrieb in Richtung der Einbringrichtung E, so dass das Aufweitelement 24 selbständig in den Spreizbereich 20 des dritten Spreizdübels 19 bewegt wird und diesen aufspreizt. Zwischen dem Kopf 23 und dem Aufweitelement 24 ist eine Setztiefenmarkierung 34 in Form einer umlaufenden, ringförmigen Farbmarkierung angeordnet, die angibt, wie weit die Prüflehre 21 zur Prüfung in den dritten Spreizdübel 19 eingeschraubt werden soll.

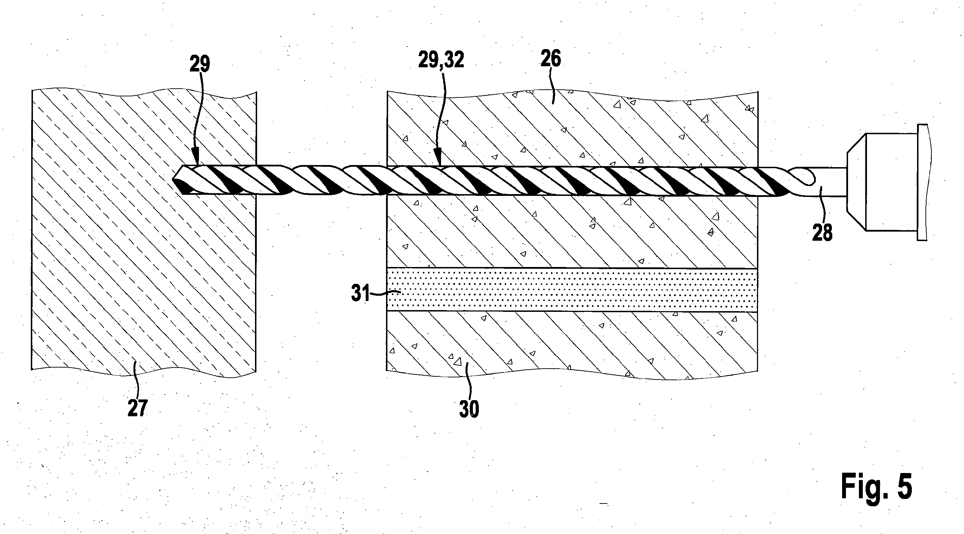

Das erfindungsgemäße Verfahren zum Verbinden einer Vorsatzschale mit einem Verankerungsgrund wird nachfolgend mit Hilfe der Figuren 5 bis 10 näher beschrieben:
Wie in Figur 5 dargestellt, wird zum Verbinden einer Vorsatzschale 26 auf Abstand mit einem Verankerungsgrund 27 mit einem Bohrer 28 in der und durch die Vorsatzschale 26 hindurch im Verankerungsgrund 27 ein erstes Bohrloch 29 erstellt. Die Vorsatzschale 26 besteht aus Ziegelsteinen 30, zwischen denen Fugen 31 aus Mörtel angeordnet sind. Der Teil des Bohrlochs 29, der sich in der Vorsatzschale 26 befindet, bildet ein Prüfbohrloch 32.

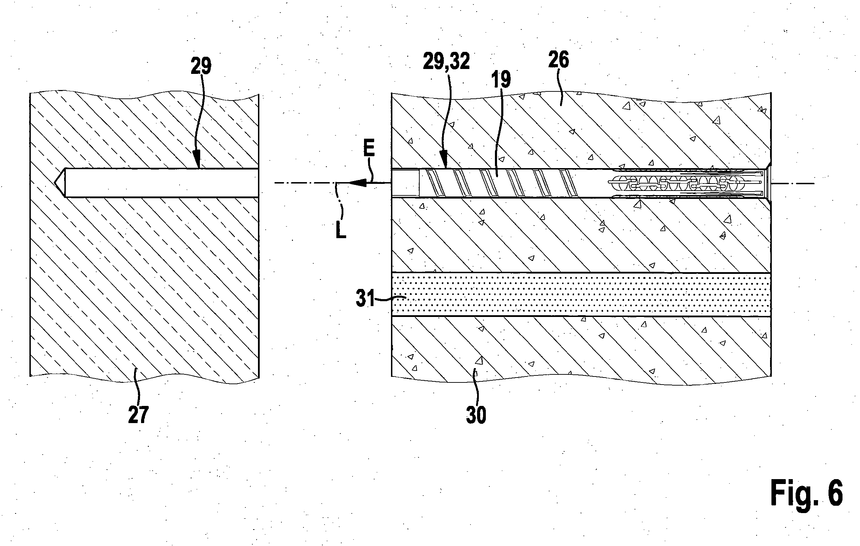

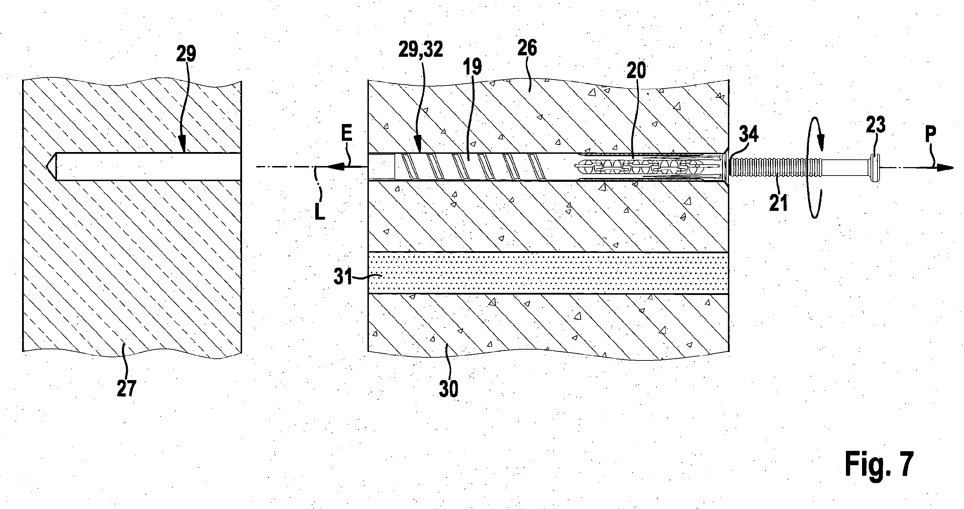

Nach dem Erstellen des Bohrlochs 29 wird der dritte Spreizdübel 19 in das Prüfbohrloch 32 in der Vorsatzschale 26 eingesetzt, wie dies in Figur 6 zu sehen ist. In den dritten Spreizdübel 19 wird dann die Prüflehre 21 drehend eingebracht, so dass das Gewinde 25 des Aufweitelements 24 in den dritten Spreizdübel 3 eingreift und den Spreizbereich 20 aufspreizt (vgl. Figur 7). Die Prüflehre 21 wird so weit in den dritten Spreizdübel 19 eingeschraubt, bis die Setztiefenmarkierung 34 mit dem hinteren Ende des dritten Spreizdübels 19 bündig ist. Dann wird durch ein nicht dargestelltes Auszugsgerät eine Prüflast P auf die Prüflehre 21 aufgebracht und am Kopf 23 der Prüflehre 21 gezogen. Abhängig von den vorgegebenen Kriterien ist die Prüfung beispielsweise dann erfolgreich, wenn der dritte Spreizdübel 19 nur um einen begrenzten Weg, beispielsweise maximal 1 mm, durch die Prüflast P aus dem Prüfbohrloch 32 gezogen wird.

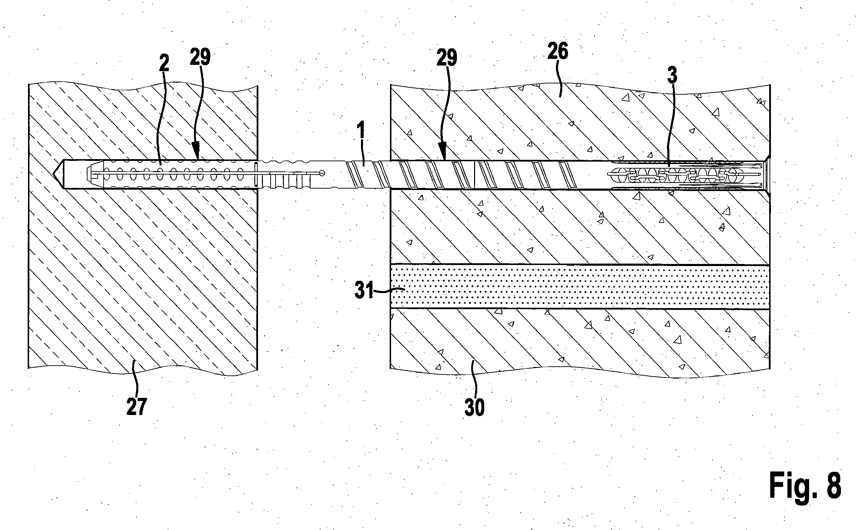

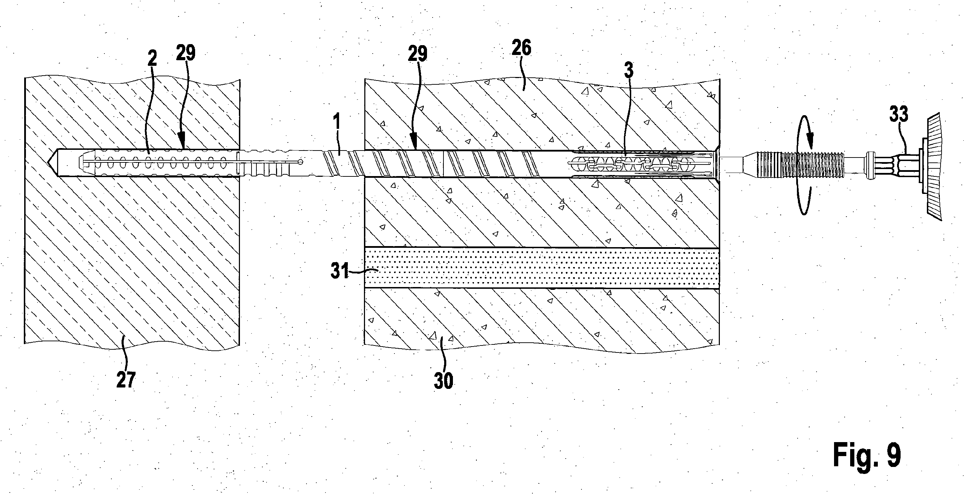

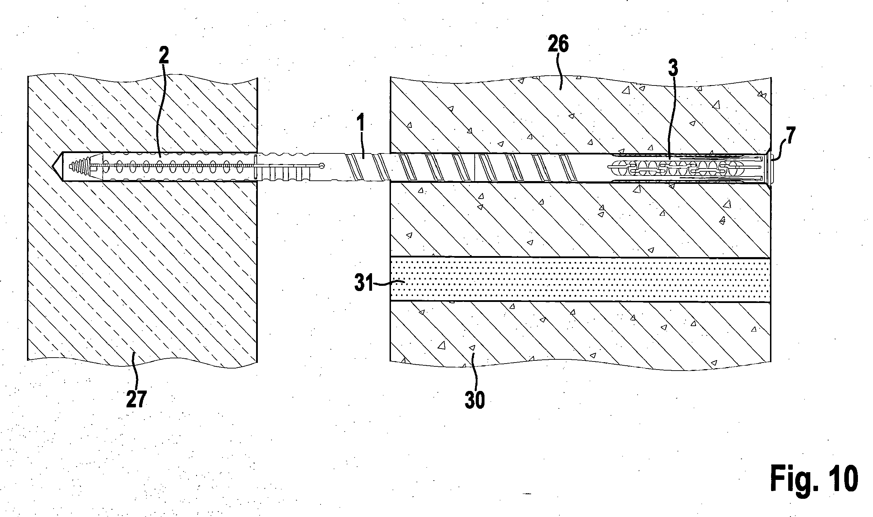

Nach erfolgter Prüfung wird die Prüflehre 21 und der dritte Spreizdübel 19 aus dem Bohrloch 29 entfernt und eine Dübelhülse 1 mit dem ersten Spreizdübel 2 und dem zweiten Spreizdübel 3 in das Bohrloch 29 eingesetzt, wie dies die Figur 8 zeigt. Dann wird das Spreizelement 7 in die Dübelhülse 1 drehend, mittels eines Drehwerkzeugs 33 eingebracht und die Spreizdübel 2, 3 mit dem Spreizelement 7 und dem Einzugsabschnitt 11 verspreizt, wie dies in den Figuren 9 und 10 dargestellt ist.

Wie oben beschrieben, ist das Aufweitelement 24 der Prüflehre 21 so gestaltet, dass er dem Einzugsabschnitt 11 des Spreizelements 7 sehr ähnlich ist, wenn auch nicht gleich. Zudem entspricht der Spreizbereich 20 des dritten Spreizdübels 19 dem Spreizbereich 6 des zweiten Spreizdübels 3. Die Prüflehre 21 ist hierdurch so gestaltet, dass der verspreizte dritte Spreizdübel 19 in der Vorsatzschale 26 im Wesentlichen die gleiche Haltekraft erreicht, wie ein durch den Einzugsabschnitt 11 verspreizter zweiter Spreizdübel 3. Nach erfolgreicher Prüfung, wenn auf die in die Dübelhülse 3 eingebrachte Prüflehre 21 eine ausreichend große Prüflast P aufgebracht werden kann, kann daher davon ausgegangen werden, dass auch ein aus der Dübelhülse 1 und dem Spreizelement 7 bestehendes Dübelsystem die Prüflast P zwischen dem zweiten Spreizdübel 3 und der Vorsatzschale 26 übertragen kann. Eine Prüfung des tatsächlich zum Verbinden der Vorsatzschale 26 mit dem Verankerungsgrund 27 verwendeten Dübelsystems erfolgt nicht, da die Ergebnisse der mit dem dritten Spreizdübel 19 und der Prüflehre 21 durchgeführten Ersatzprüfung auf das Dübelsystem übertragen werden können.

### Bezugszeichenliste

### Verfahren zum Verbinden einer Vorsatzschale mit einem Verankerungsgrund

- 1: Dübelhülse
- 2: erster Spreizdübel
- 3: zweiter Spreizdübel
- 4: Abstandshülse
- 5: Spreizbereich des ersten Spreizdübels 2
- 6: Spreizbereich des zweiten Spreizdübels 3
- 7: Spreizelement
- 8: Spreizabschnitt
- 9: Schraubengewinde
- 10: Schraubenkopf
- 11: Einzugsabschnitt
- 12: Schraubenschaft
- 13: konischer Übergangsabschnitt
- 14: zylindrischer Abschnitt
- 15: Rippe
- 16: Gewindeabschnitt
- 17: vorderer Teil der Dübelhülse 1
- 18: hinterer Teil der Dübelhülse 1
- 19: dritter Spreizdübel
- 20: Spreizbereich des dritten Spreizdübels
- 21: Prüflehre
- 22: Schaftabschnitt
- 23: Kopf
- 24: Aufweitelement
- 25: Gewinde
- 26: Vorsatzschale
- 27: Verankerungsgrund
- 28: Bohrer
- 29: Bohrloch
- 30: Ziegelstein
- 31: Fuge
- 32: Prüfbohrloch
- 33: Drehwerkzeug
- 34: Setztiefenmarkierung
- D_{A}: Durchmesser des Aufweitelements 24
- D_{E}: Durchmesser des Einzugsabschnitts 11
- L_{A}: axiale Länge des Aufweitelement 24
- L_{E}: axiale Länge des Einzugsabschnitts 11
- P: Prüflast
- E: Einbringrichtung
- L: Längsachse

## Patentansprüche

1. Verfahren zum Verbinden einer Vorsatzschale (26) mit einem Verankerungsgrund (27) mittels eines Dübelsystems,
- wobei das Dübelsystem einen ersten Spreizdübel (2) zum Verankern im Verankerungsgrund (27) und einen zweiten Spreizdübel (3) zum Befestigen in der Vorsatzschale (26) aufweist,
- wobei das Dübelsystem ein Spreizelement (7) mit einem Spreizabschnitt (8) zum Spreizen eines Spreizbereichs (5) des ersten Spreizdübels (2) und einen Einzugsabschnitt (11) zum Spreizen eines Spreizbereichs (6) des zweiten Spreizdübels (3) umfasst, und
- wobei der Einzugsabschnitt (11) durch das Eintreiben des Spreizabschnitts (8) in den Spreizbereich (5) des ersten Spreizdübels (2) in den Spreizbereich (6) des zweiten Spreizdübels (3) eingezogen wird,
mit den Schritten:
a) Bohren eines Bohrlochs (29) durch die Vorsatzschale (26) in den Verankerungsgrund (27);
b) Setzen des ersten Spreizdübels (2) in das Bohrloch (29) im Verankerungsgrund (27), und Setzen des zweiten Spreizdübels (3) in das Bohrloch (29) in der Vorsatzschale (26); und
c) Verspreizen der Spreizdübel (2, 3) durch Einbringen des Spreizelements (7);
**gekennzeichnet durch** folgende Schritte:
d) Erstellen eines Prüfbohrlochs (32) in der Vorsatzschale (26);
e) Setzen eines dritten Spreizdübels (19) in das Prüfbohrloch (32);
f) Einbringen einer Prüflehre (21) in den dritten Spreizdübel (19), wodurch der dritte Spreizdübel (19) verspreizt wird; und
g) Aufbringen einer Prüflast (P) auf die Prüflehre (21) zum Prüfen der Haltekraft des dritten Spreizdübels (19) in der Vorsatzschale (26).

2. Verfahren nach Anspruch 1, **dadurch gekennzeichnet, dass** die Prüflehre (21) derart gestaltet ist, dass der durch die Prüflehre (21) verspreizte dritte Spreizdübel (19) in der Vorsatzschale (26) im Wesentlichen die gleiche Haltekraft erreicht, wie ein durch den Einzugsabschnitt (11) verspreizter zweiter Spreizdübel (3).

3. Verfahren nach Anspruch 1 oder 2, **dadurch gekennzeichnet, dass** ein Spreizbereich (20) des dritten Spreizdübels (19) im Wesentlichen dem Spreizbereich (6) des zweiten Spreizdübels (3) entspricht.

4. Verfahren nach einem der Ansprüche 1 bis 3, **dadurch gekennzeichnet, dass** die Prüflehre (21) im Schritt f) drehend in den dritten Spreizdübel (19) eingebracht wird.

5. Verfahren nach einem der Ansprüch 1 bis 4, **dadurch gekennzeichnet, dass** die Prüflehre (21) ein Aufweitelement (24) zum Verspreizen des Spreizbereichs (20) des dritten Spreizdübels (19) aufweist, wobei an dem Aufweitelement (24) zumindest an einem in Eintreibrichtung (E) vorderen Abschnitt ein Gewinde (25) angeordnet ist.

6. Verfahren nach Anspruch 5, **dadurch gekennzeichnet, dass** die Prüflehre (21) keinen gewindefreien Abschnitt (14) aufweist.

7. Verfahren nach Anspruch 5 oder 6, **dadurch gekennzeichnet, dass** der Spreizabschnitt (8) des Spreizelements (7) als Schraubengewinde (9) ausgebildet ist, mit einer Gewindesteigung, die im Wesentlichen der Gewindesteigung des Aufweitelements (24) der Prüflehre (21) entspricht.

8. Verfahren nach einem der Ansprüche 5 bis 7, **dadurch gekennzeichnet, dass** der Einzugsabschnitt (11) des Spreizelements (7) axial beabstandete, umlaufende Rippen (15) aufweist, und dass der axiale Abstand der Rippen (15) im Wesentlichen der Gewindesteigung des Gewindes (25) des Aufweitelements (24) der Prüflehre (21) entspricht.

9. Verfahren nach einem der Ansprüche 5 bis 8, **dadurch gekennzeichnet, dass** der Durchmesser des Aufweitelements (24) der Prüflehre (21) im Wesentlichen dem Durchmesser des Einzugsabschnitts (11) des Spreizelements (7) entspricht.

10. Verfahren nach einem der Ansprüche 5 bis 9, **dadurch gekennzeichnet, dass** die axiale Länge (L_{A}) des Aufweitelements (24) der Prüflehre (21) im Wesentlichen der axialen Länge (L_{E}) des Einzugsabschnitts (11) des Spreizelements (7) entspricht.

## Claims

1. Method of joining a facing element (26) to an anchoring substrate (27) by means of a fixing plug system,
- wherein the fixing plug system has a first expansible fixing plug (2) for anchoring in the anchoring substrate (27) and a second expansible fixing plug (3) for securing in the facing element (26),
- wherein the fixing plug system comprises an expander element (7) having an expander portion (8) for expanding an expansion region (5) of the first expansible fixing plug (2) and a draw-in portion (11) for expanding an expansion region (6) of the second expansible fixing plug (3), and
- wherein the draw-in portion (11) is drawn into the expansion region (6) of the second expansible fixing plug (3) as a result of the expander portion (8) being driven into the expansion region (5) of the first expansible fixing plug (2),
having the steps of:
a) drilling a drill hole (29) through the facing element (26) into the anchoring substrate (27);
b) setting the first expansible fixing plug (2) in the drill hole (29) in the anchoring substrate (27) and setting the second expansible fixing plug (3) in the drill hole (29) in the facing element (26); and
c) expanding the expansible fixing plugs (2, 3) by introducing the expander element (7);
**characterised by** the following steps:
d) making a test drill hole (32) in the facing element (26);
e) setting a third expansible fixing plug (19) in the test drill hole (32);
f) introducing a test gauge (21) into the third expansible fixing plug (19), with the result that the third expansible fixing plug (19) is expanded; and
g) applying a test load (P) to the test gauge (21) to test the holding force of the third expansible fixing plug (19) in the facing element (26).

2. Method according to claim 1, **characterised in that** the test gauge (21) is configured in such a way that the third expansible fixing plug (19) expanded by the test gauge (21) achieves substantially the same holding force in the facing element (26) as a second expansible fixing plug (3) expanded by the draw-in portion (11).

3. Method according to claim 1 or 2, **characterised in that** an expansion region (20) of the third expansible fixing plug (19) substantially corresponds to the expansion region (6) of the second expansible fixing plug (3).

4. Method according to any one of claims 1 to 3, **characterised in that** in step f) the test gauge (21) in introduced by rotation into the third expansible fixing plug (19).

5. Method according to any one of claims 1 to 4, **characterised in that** the test gauge (21) has a widener element (24) for expanding the expansion region (20) of the third expansible fixing plug (19), the widener element (24) being provided with a thread (25) at least on a forward portion in the direction of driving-in (E).

6. Method according to claim 5, **characterised in that** the test gauge (21) does not have a thread-free portion (14).

7. Method according to claim 5 or 6, **characterised in that** the expander portion (8) of the expander element (7) is in the form of a screw thread (9), having a thread pitch that substantially corresponds to the thread pitch of the widener element (24) of the test gauge (21).

8. Method according to any one of claims 5 to 7, **characterised in that** the draw-in portion (11) of the expander element (7) has axially spaced, circumferential ribs (15), and the axial spacing of the ribs (15) substantially corresponds to the thread pitch of the thread (25) of the widener element (24) of the test gauge (21).

9. Method according to any one of claims 5 to 8, **characterised in that** the diameter of the widener element (24) of the test gauge (21) substantially corresponds to the diameter of the draw-in portion (11) of the expander element (7).

10. Method according to any one of claims 5 to 9, **characterised in that** the axial length (L_{A}) of the widener element (24) of the test gauge (21) substantially corresponds to the axial length (L_{E}) of the draw-in portion (11) of the expander element (7).

## Revendications

1. Procédé pour assembler un doublage (26) à un fond d'ancrage (27) au moyen d'un système de chevilles,
- sachant que le système de chevilles comprend une première cheville à expansion (2) pour l'ancrage dans le fond d'ancrage (27) et une deuxième cheville à expansion (3) pour la fixation dans le doublage (26),
- sachant que le système de chevilles comprend un élément d'expansion (7) avec une partie d'expansion (8) pour l'expansion d'une région d'expansion (5) de la première cheville à expansion (2) et une partie d'insertion (11) pour l'expansion d'une région d'expansion (6) de la deuxième cheville à expansion (3),
- et sachant que la partie d'insertion (11) est insérée dans la région d'expansion (6) de la deuxième cheville à expansion (3) par l'enfoncement de la partie d'expansion (8) dans la région d'expansion (5) de la première cheville à expansion (2),
avec les étapes suivantes :
a) perçage d'une forure (29) dans le fond d'ancrage (27) en traversant le doublage (26) ;
b) mise en place de la première cheville à expansion (2) dans la forure (29) dans le fond d'ancrage (27) et mise en place de la deuxième cheville à expansion (3) dans la forure (29) dans le doublage (26) ; et
c) expansion des chevilles à expansion (2, 3) par introduction de l'élément d'expansion (7) ;
**caractérisé par** les étapes suivantes :
d) réalisation d'une forure de test (32) dans le doublage (26) ;
e) mise en place d'une troisième cheville à expansion (19) dans la forure de test (32) ;
f) introduction d'un gabarit de test (21) dans la troisième cheville à expansion (19), réalisant ainsi l'expansion de la troisième cheville à expansion (19) ; et
g) application d'une charge de test (P) sur le gabarit de test (21) afin de tester la force de maintien de la troisième cheville à expansion (19) dans le doublage (26).

2. Procédé selon la revendication 1, **caractérisé en ce que** le gabarit de test (21) est conçu de telle sorte que la troisième cheville à expansion (19), dont l'expansion est réalisée dans le doublage (26) par le gabarit de test (21), atteint sensiblement la même force de maintien que la deuxième cheville à expansion (3) dont l'expansion est réalisée par la partie d'insertion (11).

3. Procédé selon la revendication 1 ou 2, **caractérisé en ce qu'**une région d'expansion (20) de la troisième cheville à expansion (19) correspond pour l'essentiel à la région d'expansion (6) de la deuxième cheville à expansion (3).

4. Procédé selon l'une des revendications 1 à 3, **caractérisé en ce que** le gabarit de test (21) est introduit à l'étape f) avec rotation dans la troisième cheville à expansion (19).

5. Procédé selon l'une des revendications 1 à 4, **caractérisé en ce que** le gabarit de test (21) présente un élément d'élargissement (24) pour réaliser l'expansion de la région d'expansion (20) de la troisième cheville à expansion (19), sachant qu'un filetage (25) est disposé sur l'élément d'élargissement (24), au moins sur une partie avant dans la direction d'enfoncement (E).

6. Procédé selon la revendication 5, **caractérisé en ce que** le gabarit de test (21) ne présente pas de partie (14) dépourvue de filetage.

7. Procédé selon la revendication 5 ou 6, **caractérisé en ce que** la partie d'expansion (8) de l'élément d'expansion (7) est réalisée sous forme de filetage de vis (9), avec un pas de filetage qui correspond sensiblement au pas de filetage de l'élément d'élargissement (24) du gabarit de test (21).

8. Procédé selon l'une des revendications 5 à 7, **caractérisé en ce que** la partie d'insertion (11) de l'élément d'expansion (7) présente des nervures périphériques (15) axialement espacées, et **en ce que** l'espacement axial des nervures (15) correspond sensiblement au pas de filetage du filetage (25) de l'élément d'élargissement (24) du gabarit de test (21).

9. Procédé selon l'une des revendications 5 à 8, **caractérisé en ce que** le diamètre de l'élément d'élargissement (24) du gabarit de test (21) correspond sensiblement au diamètre de la partie d'insertion (11) de l'élément d'expansion (7).

10. Procédé selon l'une des revendications 5 à 9, **caractérisé en ce que** la longueur axiale (L_{A}) de l'élément d'élargissement (24) du gabarit de test (21) correspond sensiblement à la longueur axiale (L_{E}) de la partie d'insertion (11) de l'élément d'expansion (7).
